# EUROPEAN PATENT SPECIFICATION

(11) **EP 2 833 823 B1**
(45) Date of publication and mention of the grant of the patent: **30.12.2020**
(21) Application number: 13724920.7
(22) Date of filing: 02.04.2013
(51) Int. Cl.: A61C 17/02

(54) **AIR/WATER DENTAL SYRINGE TIP ADAPTER SYSTEMS AND CONVERSION METHODS**
SPIITZENADAPTERSYSTEME FÜR ZAHNÄRZTLICHE WASSER/LUFT-SPRITZE UND UMWANDLUNGSVERFAHREN
SYSTÈMES ADAPTATEURS ET PROCÉDÉS DE CONVERSION D'EMBOUT DE SERINGUE DENTAIRE À AIR/EAU

(30) Priority: 03.04.2012 US 201261619578 P; 15.03.2013 US 201313841280
(43) Date of publication of application: 11.02.2015
(73) Proprietor: Berkely, Donovan, Irvine, CA 92603 (US)
(72) Inventor: Berkely, Donovan, Irvine, CA 92603 (US)
(74) Representative: Brantsandpatents bvba
(86) International application number: PCT/US2013/034888
(87) International publication number: WO 2013/151961

(56) References cited:
- WO-A1-00/33762
- US-A- 5 192 206
- US-A- 5 899 692
- US-A1- 2001 041 321

## Description

### FIELD OF THE INVENTION

This invention relates generally to air/water syringes and, in particular, to adapter units that enable replaceable, disposable tips to be used with various handle assemblies including European style syringes.

### BACKGROUND OF THE INVENTION

Dental syringes are hand-held instruments which deliver water and air under pressure into a patient's mouth for washing and drying purposes. Such instruments are widely used by dentists, orthodontists, oral surgeons, dental hygienists and dental assistants. A typical dental includes a head unit which is coupled to hoses that supply water at about 0,28 MPa (40 PSI) and air at about 0,55 MPa (80 PSI). An elongated tip coupled to the head unit is inserted into a patient's mouth, and buttons on the head unit are operated to discharge water or air through the distal end of the tip.

Cross contamination is one of the principal problems encountered with dental syringes. Bacteria and viruses can be communicated from patient to patient unless the syringe tip is adequately sanitized. The safest and most desirable approach is to replace the syringe tip from the head after each patient treatment. In addition, it is desirable to be able to replace worn tips or change to tips of different configurations quickly and easily.

Several decades ago, dental syringe tips were not readily removable from the syringe head units. Removal often necessitated the unscrewing of a coupling from the head and the sliding of the coupling off of the tip. Around this time, the tip once removed and the associated coupling were autoclaved. A number of small elastomeric O-rings had to be removed before autoclaving because they could not withstand the heat and pressure of the autoclaving process. The entire process was a time consuming, often frustrating experience.

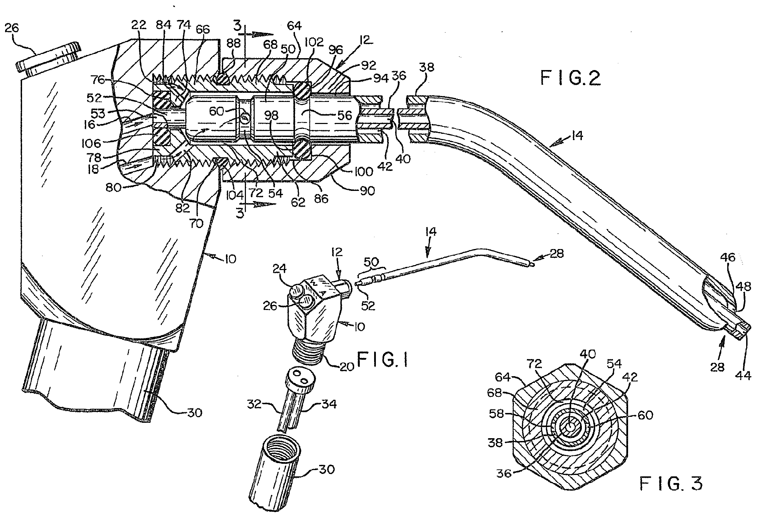

Around 1980, dental syringe quick-disconnect tips were invented. U.S. Patent No. 4,248,589 discloses a dental syringe that includes a head 10, a coupling 12, and a removable, replaceable tip 14 (Figure 1). The head 10 has internal water and air passages 16 and 18 in communication with an internally threaded cylindrical cavity 22 in the top frontal surface of the head (Figure 2). The head and tip include a corresponding number of fluid passages. The coupling 12 includes a cylindrical base and a lock nut which screws over the base. The base and the lock nut define an axially extending bore which communicates with the passages through the head and removably receives the rearward portion of the tip 14. An elastomeric O-ring is positioned between the base and the lock nut and surrounds the bore. When the rearward portion of the tip is fully inserted in the bore the O-ring seats in a groove surrounding the rearward portion of the tip. When the lock nut is fully screwed over the base, deformation of the O-ring is substantially prevented and the tip cannot be withdrawn or ejected from the coupling.

The tip 14 comprises inner and outer elongate, coaxial, spaced apart pipes 36 and 38 which define water and air passages 40 and 42, respectively. The forward portions of the pipes are angled with respect to the rearward portions. The forward end 44 of the inner pipe 36 is open and the forward end 46 of the outer pipe 38 is bent inwardly and is sealed to the inner pipe 36. The forward end 46 has a plurality of annularly spaced nozzle apertures such as 48.

The rearward portion 50 of the outer pipe 38 terminates short of the rearward portion 52 of the inner pipe 36 and is bent inwardly and sealed to the rearward portion 52. The rearward end 53 of the inner pipe 36 is open and coaxial with the water passage 16 and abuts the bottom of the cavity 22 when inserted in the coupling 12. The periphery of the rearward portion 50 is formed with a pair of axially spaced, rearward and forward annular grooves 54 and 56. A pair of diametrically positioned inlet apertures 58 and 60 extend through the wall of the outer pipe 38 in the groove 54, as shown in Figure 3.

Ducts 82 and 84 in the base 62 extend from the bore 72 in the base to a chamber 80. When the rearward portion of the tip is fully inserted in the bore 72, air can flow from the air passage 18 into the chamber 80, through the ducts 82 and 84, into the bore 72, through the apertures 58 and 60, into the air passage 42 and through the tip.

Push buttons 24 and 26 on the top rear surface of the head are coupled to normally closed valves and are selectively hand-operated to discharge water, air, or both through the distal end 28 of the tip 14. A handle 30 can be threaded with the shank 20 to connect water and air supply hoses 32 and 34 to the water and air passages 16 and 18, respectively. When the push buttons 24 and 26 are simultaneously depressed water spray mist is produced.

Since the development of the quick-release syringe tip system just described several improvements have taken place. Central to such improvements is the development of the disposable tip which is retrofittable to the older metal units which must be autoclaved to reuse. Disposable air/water syringe tips resemble bent, plastic straws with multiple cannulations to receive and deliver air and water from existing hand-held units. One leading manufacturer is Crystal Tip of Irvine, CA.

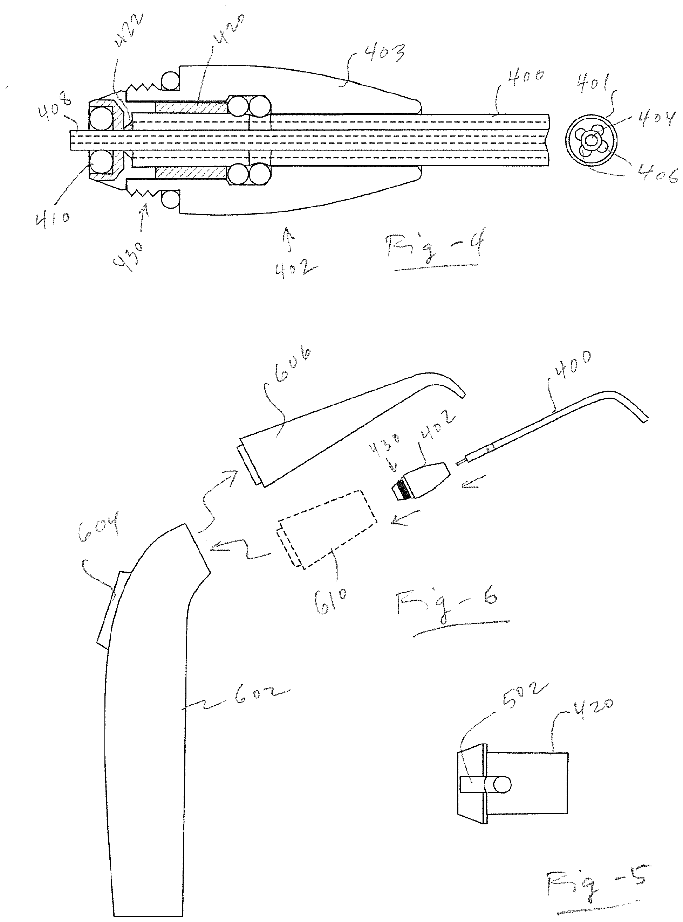

As with the earlier, autoclavable metal syringe tips, the proximal end of the Crystal Tip includes a central, protruding tube to receive water which, like its predecessors, seals against an O-ring in the syringe body. However, as shown in Figure 4, the tip does not have proximal side ducts through which the air flows; rather the proximal end surrounding the water tube does not 'bottom out' within the syringe body, allowing air to enter the cannulations surrounding the central water tube. Crystal Tips are designed to be used directly on common U.S. and Canadian syringes. In particular, Crystal Tips fit syringes from Adec (Newberg, OR), DCI International (Newberg, OR) and Unic/Heka (Ishøj, Denmark) without the need for any so-called adapter units.

The Patent No. US 5,192,206 discloses a kit for connecting a disposable syringe to a handpiece body. The document mentions the tip being elongated and having a central water-carrying tube and surrounding air-carrying channels. The kit has a connector assembly which has a connector with at one end an opening for the insertion of the disposable syringe tip. The kit also comprises an adapter assembly which can couple on one end to the handpiece body and on the other end to the other end of the connector. The adapter assembly includes components with different passages to allow water and air from the handpiece body to the channels of the disposable tip. The kit however is based on a certain type of syringe body and tip and as such, is only compatible with a single type of syringe, or syringe bodies and syringe tips. In reality, a multitude of possibilities exist in syringe bodies and tips, and not all of these are interchangeable in the aspect of connecting a disposable syringe tip to the syringe body. Furthermore, the Patent does not even mention the possibility of different types of syringes and as such, does not provide for a solution to the problem posed thereby.

Currently in Europe, however, most syringes use autoclavable tips. As a result, there has been little attempt to upgrade to new standards that have been in place for years. As such, disposable tips, including Crystal Tips, cannot be used directly on any European syringe. Syringes with autoclavable tips use a variety of routing patterns to deliver air and water to the tip. However, all U.S. disposable tips receive their air flow through the base of the tip that is inserted into the syringe. Autoclavable tips route air flow through a side port (hole) directly below an O-ring grove on the metal tip. As such, without some type of conversion, disposable tips are incompatible with European-style syringes that use autoclavable tips.

Given that there are numerous proprietary designs outside North America, it would be advantageous to provide these syringes with appropriate adapter kits enabling them to utilize standard, disposable quick-release air/water tips.
US 2001/0041321 discloses a dental three-way syringe with a disposable tip comprising an assembly of two coaxial tubes. The tip can be attached via an adaptor which allows the same tip to be fitted to different syringe devices by the use of different adaptors.

### SUMMARY OF THE INVENTION

This invention resides in conversion assemblies enabling a disposable tip to connect to an existing dental syringe configured to receive a different type of tip such as an autoclavable tip. The tip has proximal and distal ends with a central, water-carrying tube surrounded by air-carrying channels. The tip, typically constructed from extruded or molded plastic, may be straight or bent, and may have flat flush ends or a water tube that extends outwardly from the proximal end.

A conversion kit enabling an air/water syringe body to receive a disposable tip includes a cap subassembly with a cap body having a distal opening into which the proximal end of the elongated disposable tip is inserted, and an adapter subassembly having a proximal end configured for connection to the syringe body and a distal end configured for coupling to the cap subassembly. The adapter subassembly includes one or more components with cut-outs, grooves or channels to direct air and water from the syringe body to the air-carrying channels and water-carrying tube of the disposable tip through the cap subassembly.

To accommodate a wide variety of syringe styles, the adapter subassembly may include a proximal receptacle to receive a stem on the syringe body; a proximal stem insertable into the syringe body; one or more proximal air- or water-carrying tubes insertable into the syringe body; or a threaded connection to the syringe body.

The preferred embodiment further includes a cup-shaped ferrule to receive the proximal end of the disposable tip once inserted into the cap subassembly. Such a ferrule may include a central opening through which water passes into the water-carrying tube of the disposable tip and one or more side cut-outs through which air passes into the air-carrying channels of the disposable tip. The ferrule may further include a central opening to receive a water-carrying tube extending from the proximal end of the disposable tip. A threaded or quick-disconnect connection may be provided between the cap and adapter subassemblies. The cap and adapter subassemblies are preferably autoclavable in the absence of the disposable tip.

A method enabling a dental syringe having an existing tip to instead receive a disposable tip having a central, water-carrying tube surrounded by a plurality of air-carrying channels, comprises the steps of: removing the existing tip from the syringe; coupling conversion assembly to the syringe, the assembly having proximal end adapted for connection to the syringe in place of the existing tip, and a distal end with an opening to receive the proximal end of a disposable tip, the conversion unit including an internal structure with a first path for coupling the water port of the syringe to the water-carrying tube of the tip and a second path for coupling the air port of the syringe to the air-carrying channels of the tip; and inserting the proximal end of the tip into the distal end of the adapter such that water is able to flow from the syringe through the water-carrying tube of the disposable tip, and air from the syringe is able to flow from the syringe through the air-carrying channels of the disposable tip.

### BRIEF DESCRIPTION OF THE DRAWINGS

FIGURE 1 is an exploded isometric view of a prior art dental syringe showing its quick-release tip withdrawn;
FIGURE 2 is an enlarged side elevational view of the dental syringe of Figure 1 with portions broken away;
FIGURE 3 is a sectional view taken along line 3--3 of Figure 2;
FIGURE 4 is a drawing in partial cross section showing an adapter body and disposable tip applicable to the invention;
FIGURE 5 is a side view of a typical ferrule constructed in accordance with the invention, showing side grooves configured for the passage of air;
FIGURE 6 is an exploded view illustrating how the invention replaces an autoclavable tip on a generic, European-style with a conversion kit and disposable tip;
FIGURE 7 is a cross section of a quick-release version of the threaded adapter body of Figure 4;
FIGURES 8A-8G illustrate syringe systems to which the invention is applicable that feature stems protruding from the syringe body;
FIGURES 9A-9C illustrate syringe systems to which the invention is applicable that feature threaded connections between the syringe body and the tip which is removed;
FIGURES 10A-10F illustrate syringe systems to which the invention is applicable that feature stems protruding from the removed tip and into the syringe body;
FIGURES 11A-11D illustrate syringe systems to which the invention is applicable that feature tube projections from the removed tip and into the syringe body;
FIGURE 12 is a cross section of a Castellini syringe body and a conversion kit enabling the syringe to accept disposable tips;
FIGURE 13 is a cross section of a Cefla F3 LUZ syringe body and a conversion kit enabling the syringe to accept disposable tips;
FIGURE 14 is a cross section of a Cefla F6 Anthos syringe body and a conversion kit enabling the syringe to accept disposable tips;
FIGURE 15 is a cross section of a Chirana syringe body and a conversion kit enabling the syringe to accept disposable tips;
FIGURE 16 is a cross section of a Faro SM03 syringe body and a conversion kit enabling the syringe to accept disposable tips;
FIGURE 17 is a cross section of a Faro SYR syringe body and a conversion kit enabling the syringe to accept disposable tips;
FIGURE 18 is a cross section of a Kavo 1056 syringe body and a conversion kit enabling the syringe to accept disposable tips;
FIGURE 19 is a cross section of a Kavo 1056S syringe body and a conversion kit enabling the syringe to accept disposable tips;
FIGURE 20 is a cross section of a Kavo 6F syringe body and a conversion kit enabling the syringe to accept disposable tips;
FIGURE 21 is a cross section of a Kavo Systematica (with light) syringe body and a conversion kit enabling the syringe to accept disposable tips;
FIGURE 22 is a cross section of a Kavo Systematica (without light) syringe body and a conversion kit enabling the syringe to accept disposable tips;
FIGURE 23 is a cross section of a Kavo K4 syringe body and a conversion kit enabling the syringe to accept disposable tips;
FIGURE 24 is a cross section of a Kavo Esthetica syringe body and a conversion kit enabling the syringe to accept disposable tips;
FIGURE 25 is a cross section of a Sirona 4000 syringe body and a conversion kit enabling the syringe to accept disposable tips;
FIGURE 26 is a cross section of a Sirona C8 Teneo syringe body and a conversion kit enabling the syringe to accept disposable tips;
FIGURE 27 is a cross section of a Ritter Topjet syringe body and a conversion kit enabling the syringe to accept disposable tips;
FIGURE 28 is a cross section of a Luzzani Mini Assistant syringe body and a conversion kit enabling the syringe to accept disposable tips;
FIGURE 29 is a cross section of a Luzzani Mini Mate syringe body and a conversion kit enabling the syringe to accept disposable tips;
FIGURE 30 is a cross section of a Luzzani Mini Light syringe body and a conversion kit enabling the syringe to accept disposable tips;
FIGURE 31 is a cross section of a Luzzani Mini Brite syringe body and a conversion kit enabling the syringe to accept disposable tips;
FIGURE 32 is a cross section of a Morita WS66 syringe body and a conversion kit enabling the syringe to accept disposable tips;
FIGURE 33 is a cross section of a Morita WS97 syringe body and a conversion kit enabling the syringe to accept disposable tips;
FIGURE 34 is a cross section of a Morita W10 yringe body and a conversion kit enabling the syringe to accept disposable tips;
FIGURE 35 is a cross section of a Morita WS12 syringe body and a conversion kit enabling the syringe to accept disposable tips;
FIGURE 36 is an exploded view of a Takara Belmont syringe body and a conversion kit enabling the syringe to accept disposable tips;
FIGURE 37 is a cross section of an Osada MSF syringe body and a conversion kit enabling the syringe to accept disposable tips; and
FIGURE 38 is a cross section of a Tridac syringe body and a conversion kit enabling the syringe to accept disposable tips.

### DETAILED DESCRIPTION OF THE INVENTION

This invention improves upon existing air/water syringe instrumentation by providing adapter units that enable replaceable, disposable tips to be used with various syringe assemblies, including European-style syringes. To accomplish this goal, the invention provides two subassemblies; first, a cap subassembly that receives the disposable tip, and an adapter subassembly that couples the cap with the tip to the syringe body after the non-disposable or autoclavable tip has been removed.

Figure 4 is a drawing in partial cross section which illustrates a cap subassembly applicable to the invention. The disposable tip is shown at 400, and 401 is and end view showing the central water-carrying tube 404 surrounded by air-carrying channels 406. In the tip shown, a Crystal Tip from Westside Resources of Irvine, CA, the water tube protrudes form the proximal end of the tip at 408, facilitating an additional O-ring seal at 410 for enhanced air/water separation. However, the invention is also applicable to disposable tips with flush air/water passages opposing flat proximal and distal ends. Nor is the invention limited in terms of the number of air-carrying channels surrounding the central water-carrying tube.

Continuing the reference to Figure 4, the cap subassembly 402 includes an outer body 403 with a distal end to receive the tip 400 and a proximal end configured to receive a ferrule 420. The ferrule includes a cup-shaped receptacle that receives the proximal end of the disposable tip once inserted into the cap body 403. In the configuration shown, the proximal end of the tip includes a tapered region to ensure that the tip end does not "bottom out" against the bottom of the ferrule cup. This allows air to flow through side grooves 502 shown in Figure 5 and into the air-carrying channels 406 of the tip. Again, however, as long as access to the air-carrying channels is provided, such a tapered region is not necessarily required.

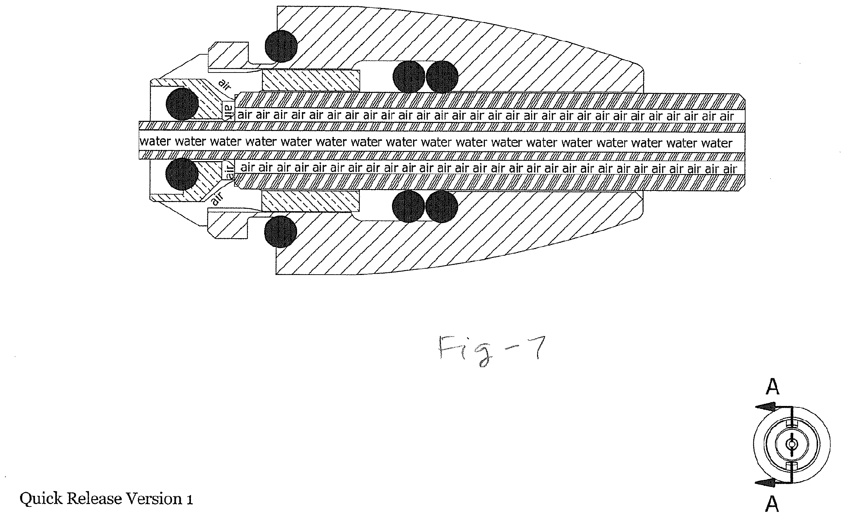

Figure 6 is a simplified drawing showing a generic syringe body 602 with air/water control buttons 604. The figure also shows a generic autoclavable tip 606 which is removed from the body 602 and replaced with a cap body 402 receiving disposable tip 400. A generic adapter subassembly is shown at 610 which not only couples the cap subassembly to the syringe body, but also includes appropriate passageways necessary to ensure that air and water supplied by the syringe find their ways to the respective air and water channels of the disposable tip. Note that the cap subassembly may include a threaded connector 430 or, alternatively, may utilize a quick release connection of the type depicted in Figure 7. Figure 7 also illustrates air and water flow which would be the same in Figure 4.

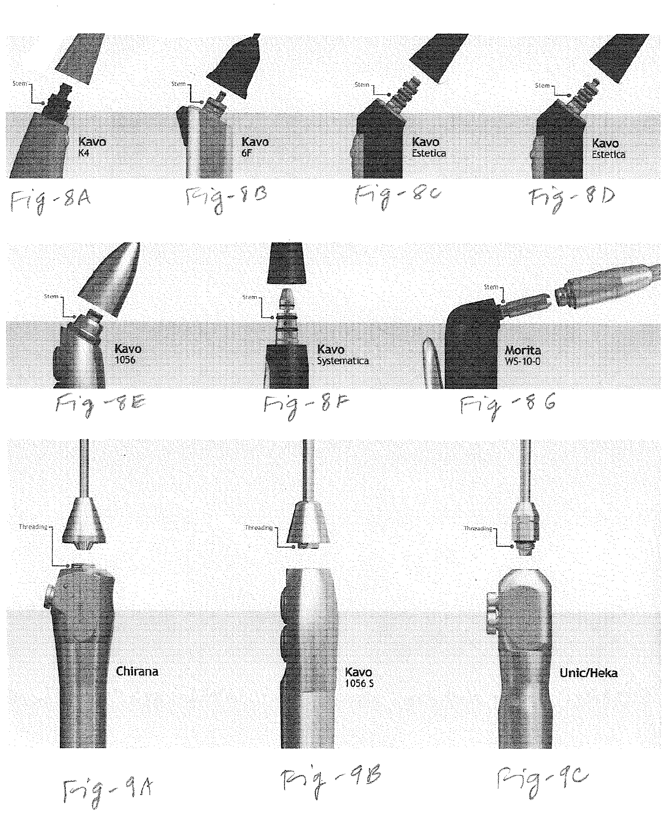

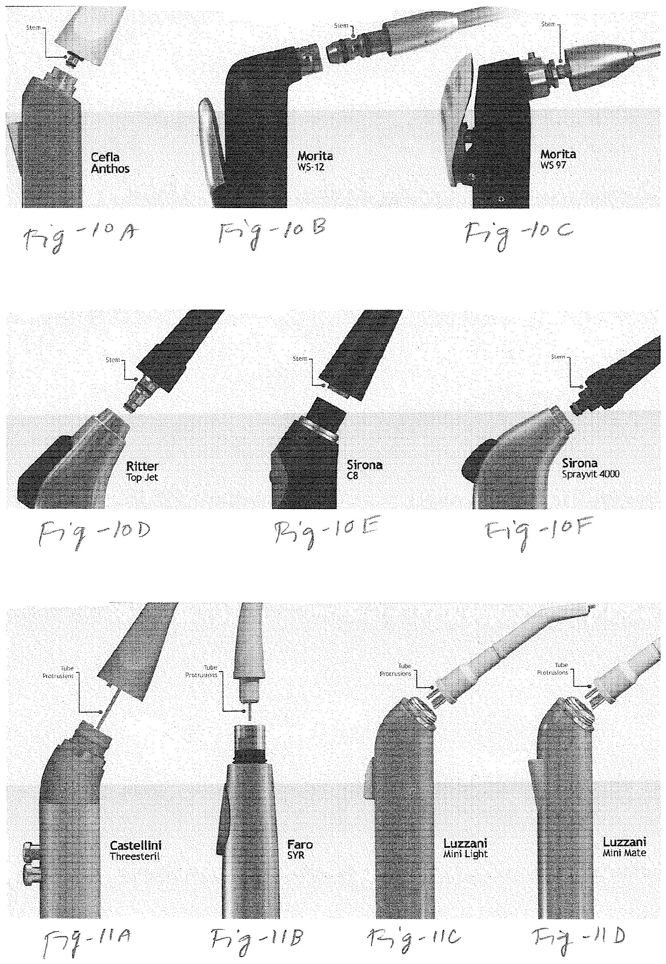

The adapter subassemblies of the invention span a range of parts and complexity depending upon the type of syringe and the tip being replaced. That said, the invention accommodates all current styles and may be extended to yet-to-be developed designs with appropriate engineering modification. In particular, the invention includes adapter subassemblies to accommodate syringe systems with stems that protrude from the syringe body, as exemplified in Figures 8A-8G; syringe systems that feature threaded connections between the syringe body and the tip without any prominent protrusions, as depicted in Figures 9A-9C; syringe systems with stems protruding from the removed tip, as shown in Figures 10A-10F; and syringe systems that feature tube projections from the removed tip, as shown in Figures 11A-11D.

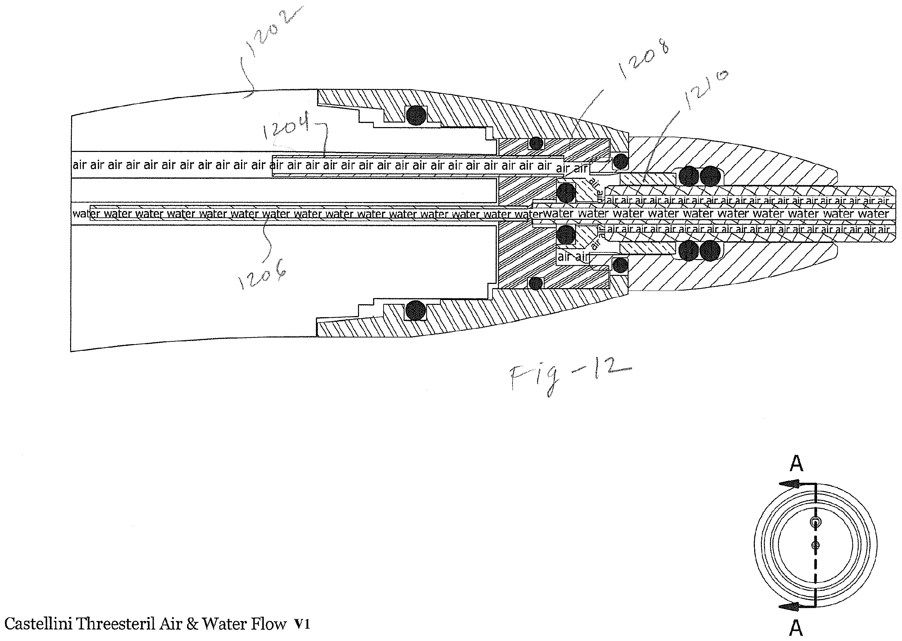

Figures 12 to 38 are detailed cross-sectional drawings that show particular adapter subassemblies and, in some cases, modified ferrules depending upon the design requirements. In these drawings, the existing syringe body is shown without cross-hatching, whereas the cap and adapter subassemblies are cross-hatched. Air and water flows are also illustrated with text in each cross section. All conversion kits further include multiple O-rings, depicted as black circles. In terms of materials, the ferrules are preferably constructed of a brass alloy to achieve demanding tolerances, whereas the other hard components may be constructed of aluminum or hard plastic. Although conversion kits having three or more components in addition to the O-rings, those of skill in the art will recognize that fewer pieces may be used through appropriate machining. For example, the ferrule and end cap may be formed of an integral unit by machining a single piece of brass or aluminum. While such fabrication may complicate the manufacturing process somewhat, the end result eliminates O-rings and simplifies assembly by the user.

While Figures 12 to 38 are well-understood and apparent to those of skill, comments will be made about incidental features and structures.

Figure 12 is a cross section of a Castellini syringe body and conversion kit. Note in this case that since the syringe body 1202 expected to receive elongated air/water tubes from the removed tip, they are provided at 1204, 1206. The adapter subassembly 1201 also includes a component 1208 between the syringe body 1202 and ferrule 1210 coupled to the back of cap subassembly 1200.

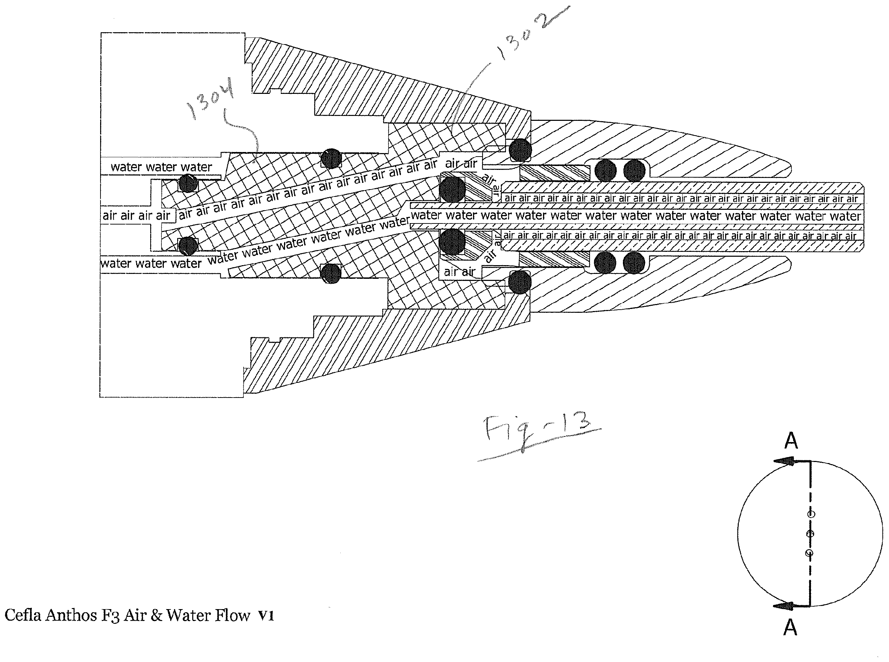

The Cefla F3 LUZ syringe body and conversion kit of Figure 13 includes an intermediate component 1302 in the adapter subassembly 1301 with slanted air/water channels and a stem 1304 that fits into the syringe body to replace the stem on the removed autoclavable tip. The cap subassembly is depicted at 1300.

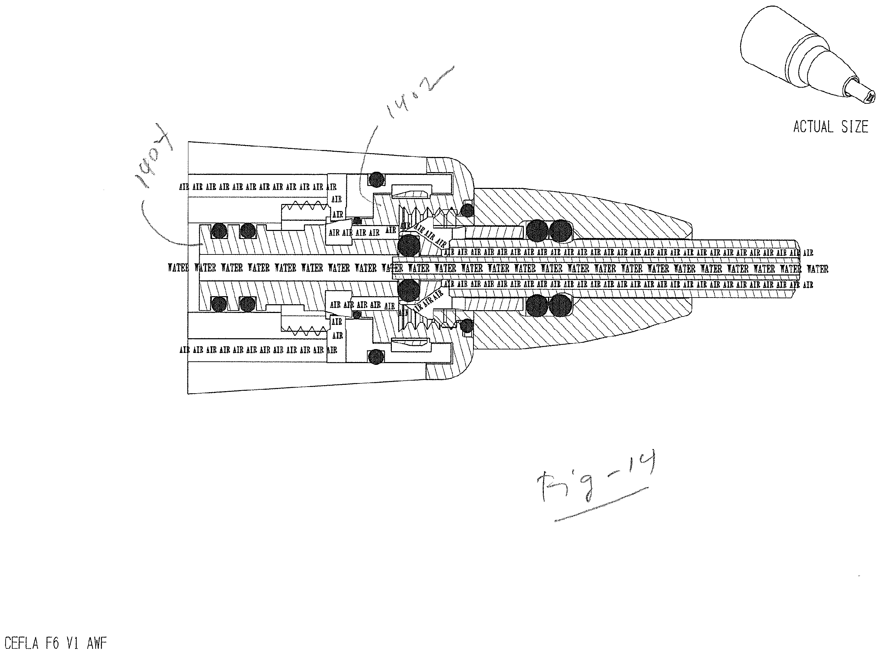

Figure 14 is a cross section of a Cefla F6 Anthos syringe body and a conversion kit which also includes a component 1402 in adapter subassembly 1401 providing a stem 1404 into the body of the syringe. The cap subassembly is shown at 1400.

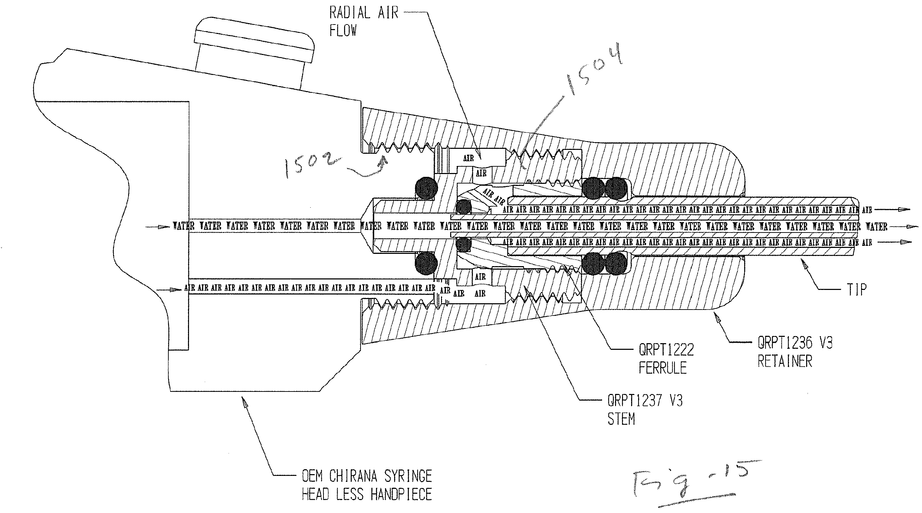

The Chirana syringe body and conversion kit of Figure 15 provides an anticipated threaded connection at 1502 with no prominent protrusions as with the tip being replaced. The radial air flow in this case is guided to the ferrule through a component 1504 forming part of the adapter subassembly. Note that in this case the cap subassembly 1500 extends all the way to the syringe body.

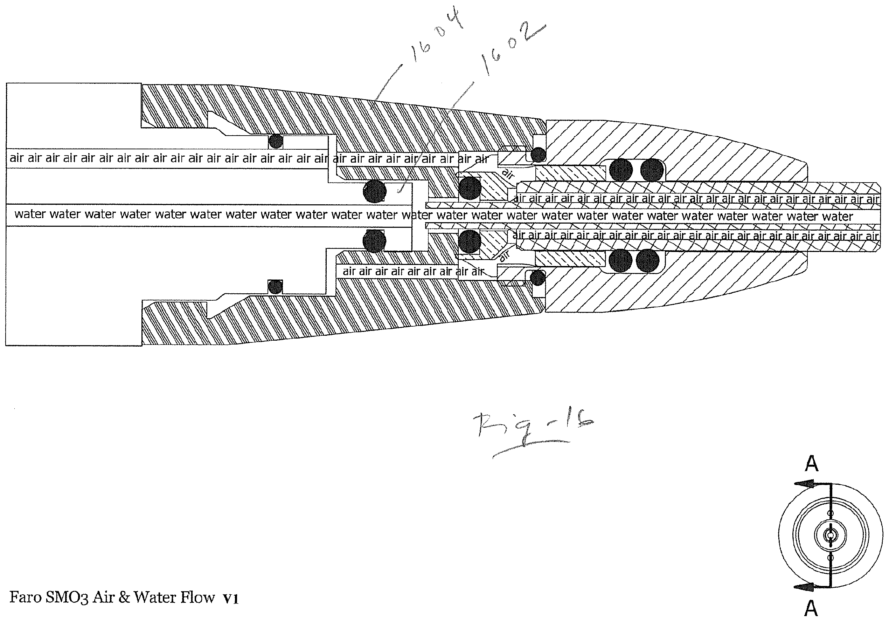

The Faro SM03 syringe body of Figure 16 qualifies as a stem (1602) on the syringe system. Air is brought in from the side through adapter subassembly 1604. The cap subassembly is shown at 1600.

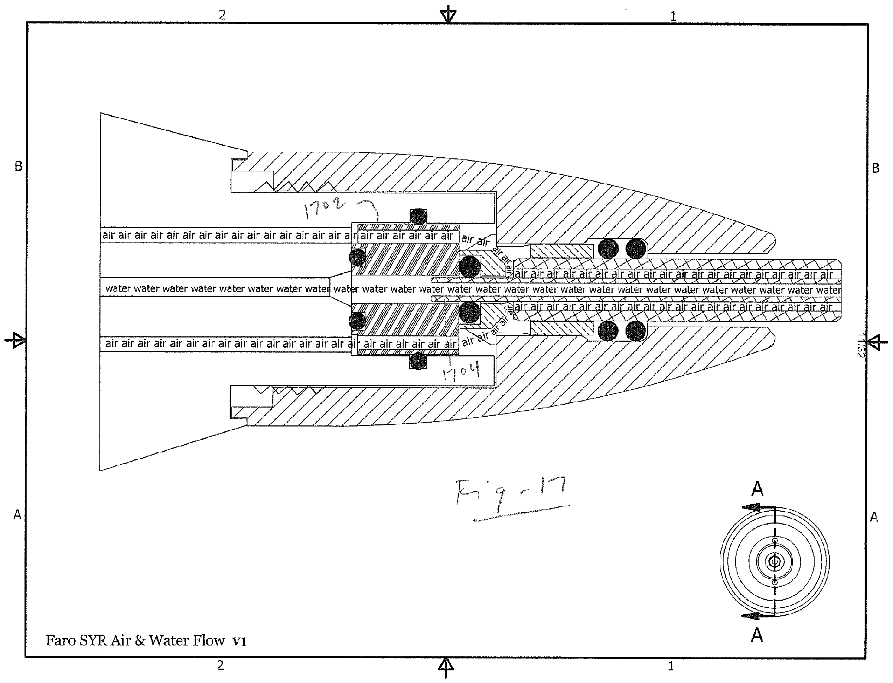

Figure 17 is a cross section of a Faro SYR syringe body and a conversion kit. Although the replaced tip included an extension tube, 1702 of the adapter subassembly allows the extension 1704 of the tip itself to be used instead. The cap subassembly, shown at 1600, extends all the way to the syringe body 1701.

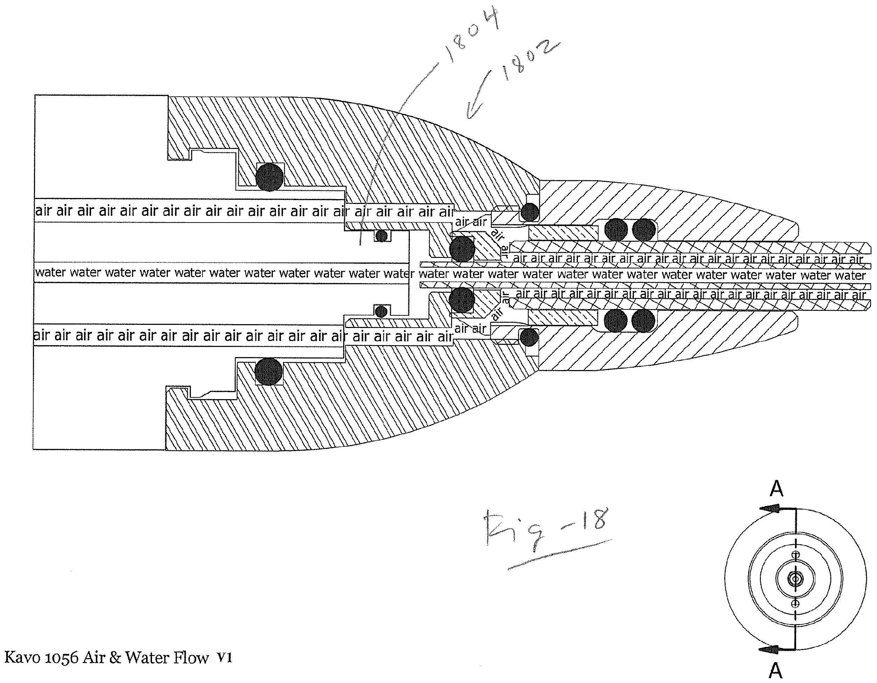

Figure 18 is a cross section of a Kavo 1056 syringe body and a conversion kit. In this case the adapter subassembly 1802 includes two side passages for air flow to the ferrule and tip. The adapter subassembly 1802 is also configured to receive the stem 1804 on the syringe body. The cap subassembly is shown at 1800.

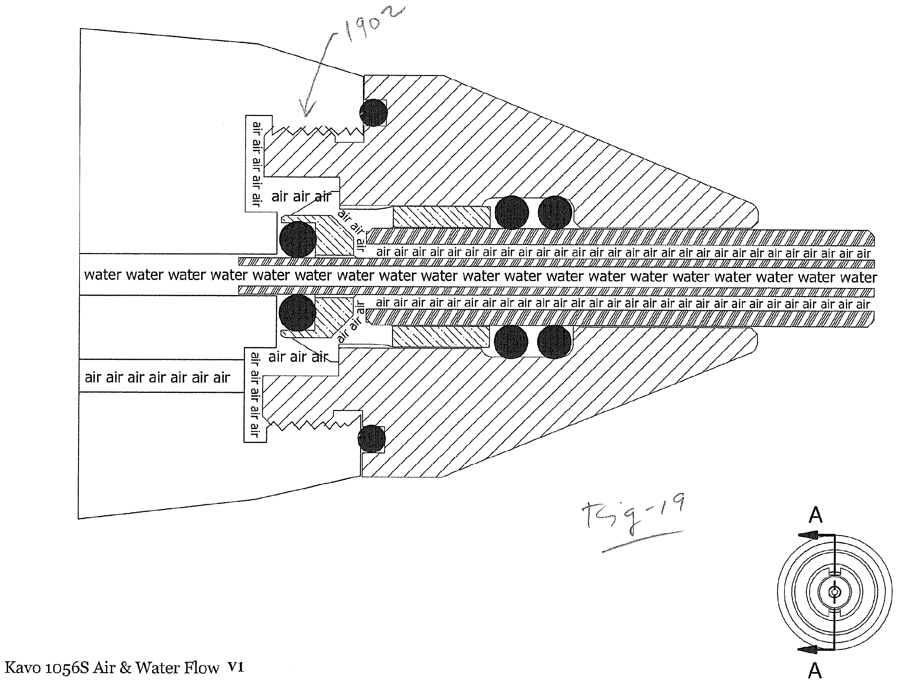

Figure 19 is a cross section of a Kavo 1056S syringe body and a conversion kit. This includes a threaded connection 1902 without any prominent protrusions or tubes. The cap and adapter subassemblies are combined in this design at 1900. The ferrule is depicted at 1901.

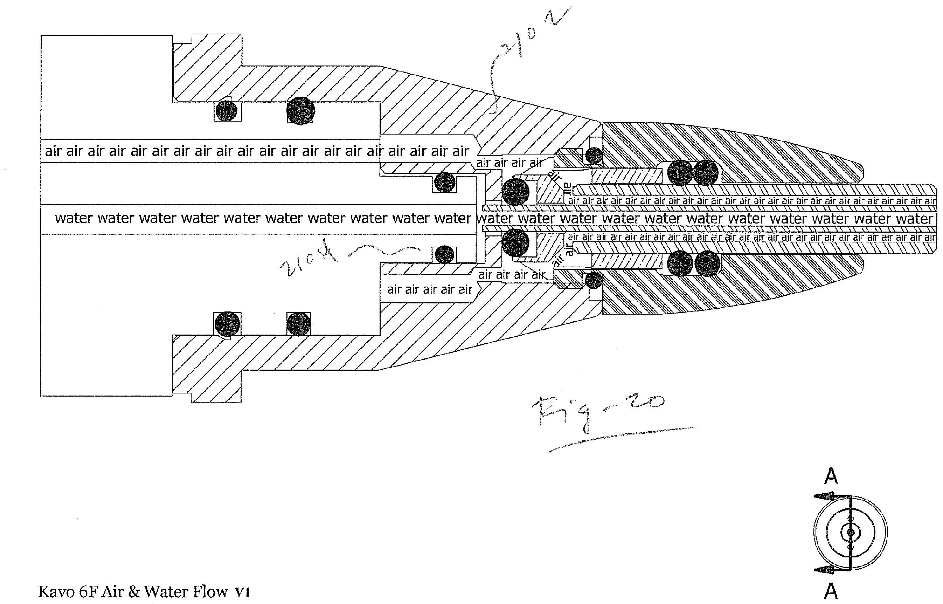

The Kavo 6F syringe body of Figure 20 also includes a stem 2104 received by the adapter subassembly 2102. The cap subassembly is shown at 2100.

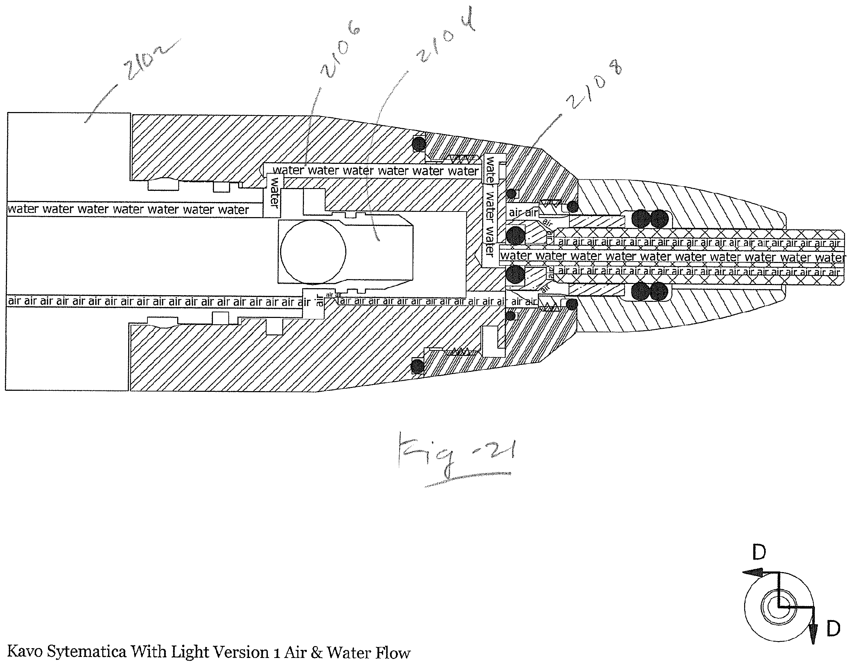

Figure 21 is a cross section of a Kavo Systematica (with light) syringe body and the conversion kit for that unit, which includes an adapter subassembly 2101 with a receptacle to receive the stem 2104 on the syringe body 2102. In this case, the water line 2106 is offset, but intermediate component 2108 of the adapter subassembly directs the water flow to the base of the ferrule and disposable tip. The cap subassembly is shown at 2100.

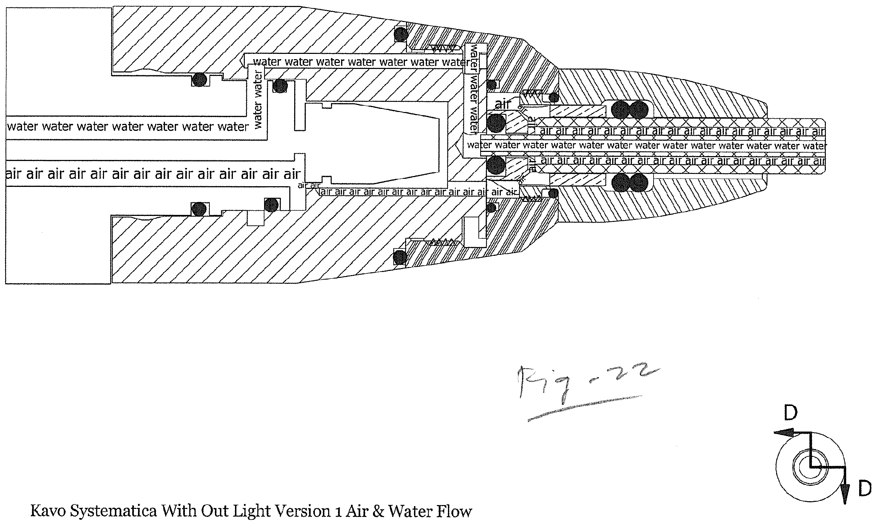

The Kavo Systematica (without light) syringe body of Figure 22 is quite similar to the lighted version, as is the conversion kit. The adapter subassembly is shown at 2201 and the cap subassembly is shown at 2200.

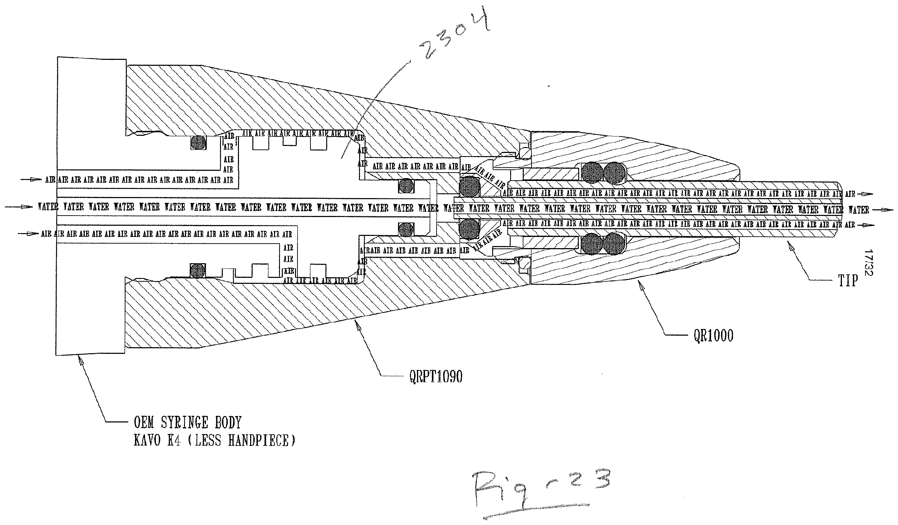

Figure 23 illustrates a conversion kit applicable to the Kavo K4 syringe. Note that in this and other embodiments of the invention, not all of the o-rings provided on the stem 2304 of the syringe are replaced once removed to receive the adapter and cap subassemblies. The adapter subassembly is shown at 2301 and the cap subassembly is shown at 2300.

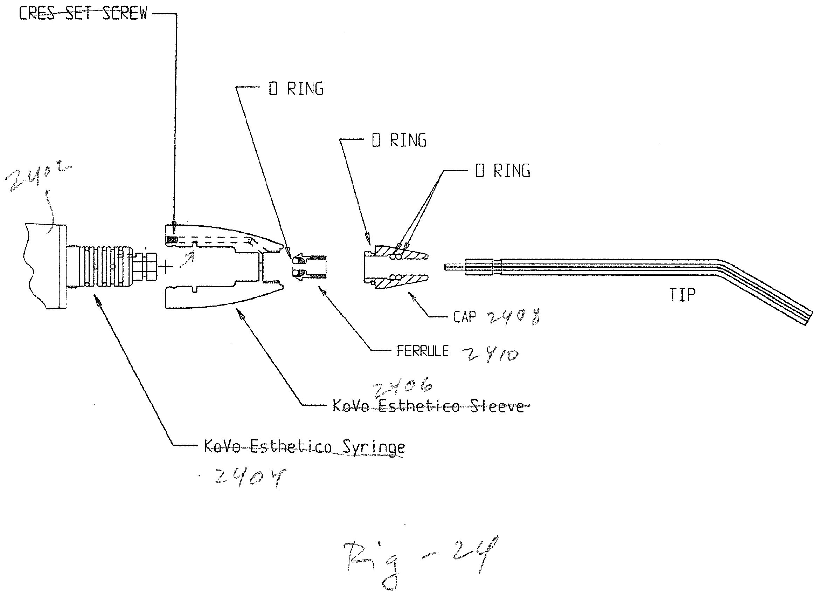

The Kavo Esthetica syringe body shown in Figure 24 includes an elongated stem 2404 on the syringe body 2402, with air flowing out the side of the stem and into adapter subassembly 2406. Cap subassembly 2408 and ferrule 2410 cooperate to guide air and water to their respective destinations and shown in the Figure.

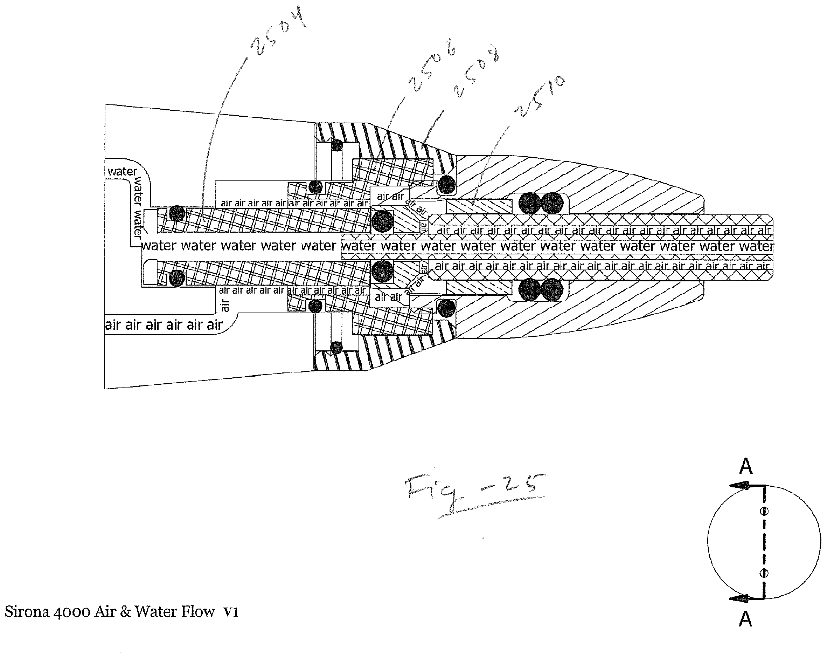

The Sirona 4000 is one of the stem-on-tip configurations. As shown in Figure 25, multiple components 2504, 2506, 2508, 2510 in the adapted subassembly 2501 cooperate in this somewhat complex solution to air and water flow. The cap subassembly is depicted at 2500.

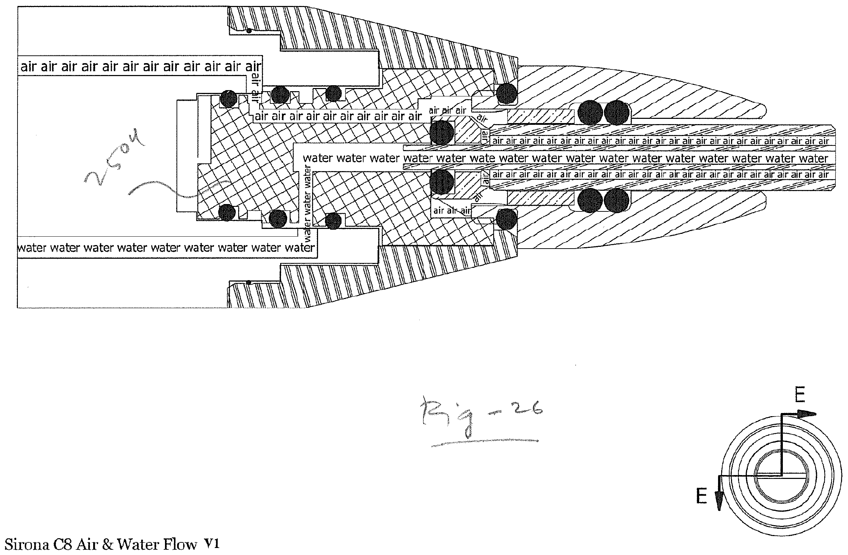

The Sirona C8 system of Figure 26 is somewhat similar to the 4000 system of Figure 25, with one exception being that both air and water are brought in through the sides of the stem 2504, as with the autoclavable tip that was replaced. The adapter subassembly is shown at 2601, and the cap subassembly at 2600.

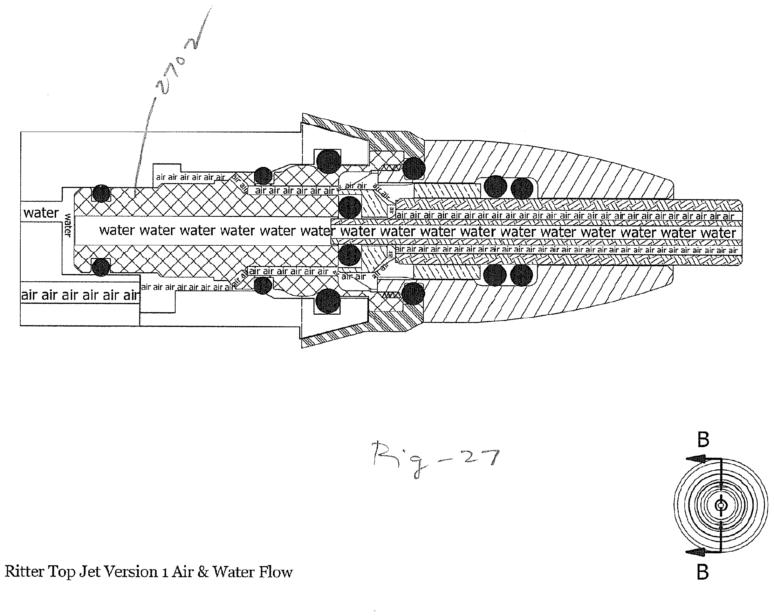

Figure 27 is a cross section of a Ritter Topjet syringe body and a conversion kit, which includes an adapter subassembly with a somewhat elongated stem 2702 on the adapter subassembly 2701 to match the stem of the tip being replaced. Multiple components and O-rings are required, particularly with directing the air flow. The cap subassembly is called out at 2700.

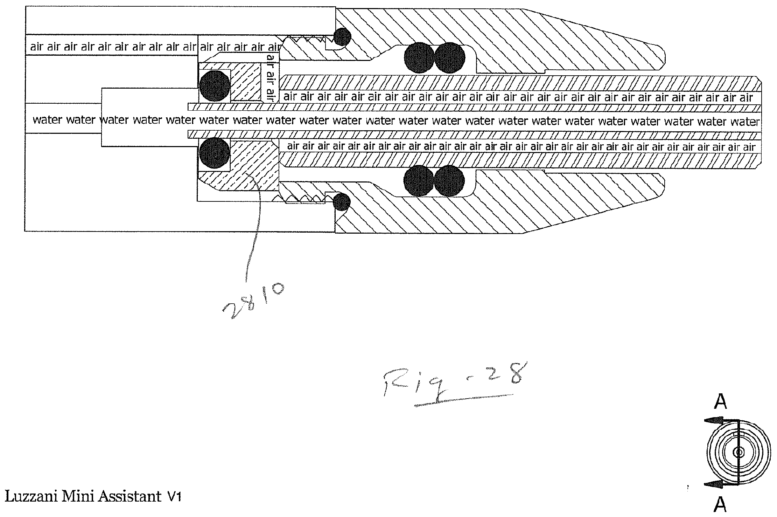

Luzzani Mini Assistant syringe body and conversion kit of Figure 28 is quite simple, with component 2810 comprising the adapted subassembly. The cap subassembly is shown at 2800. Note that this is a ferrule-less design.

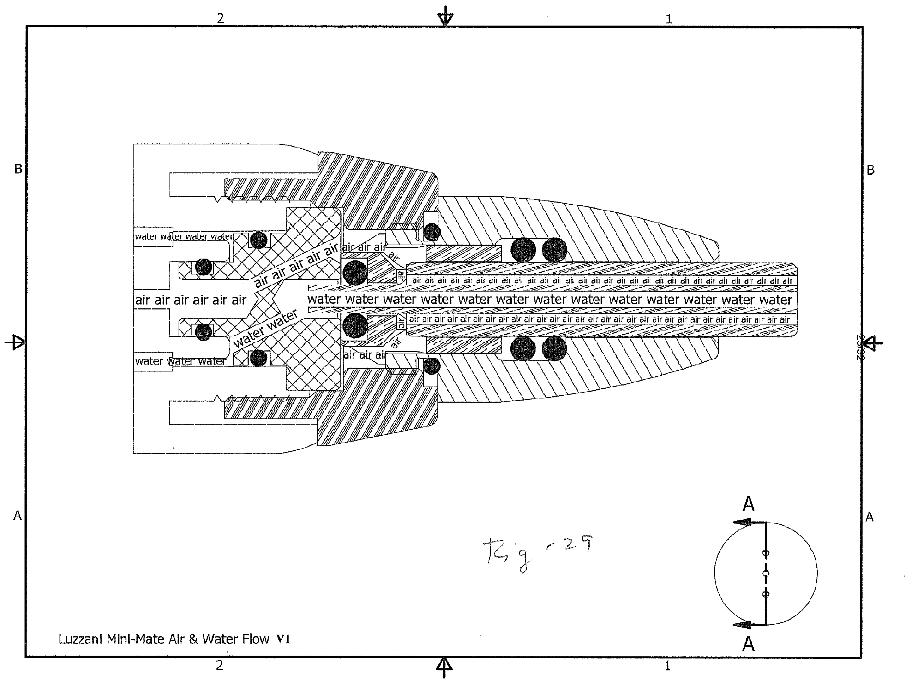

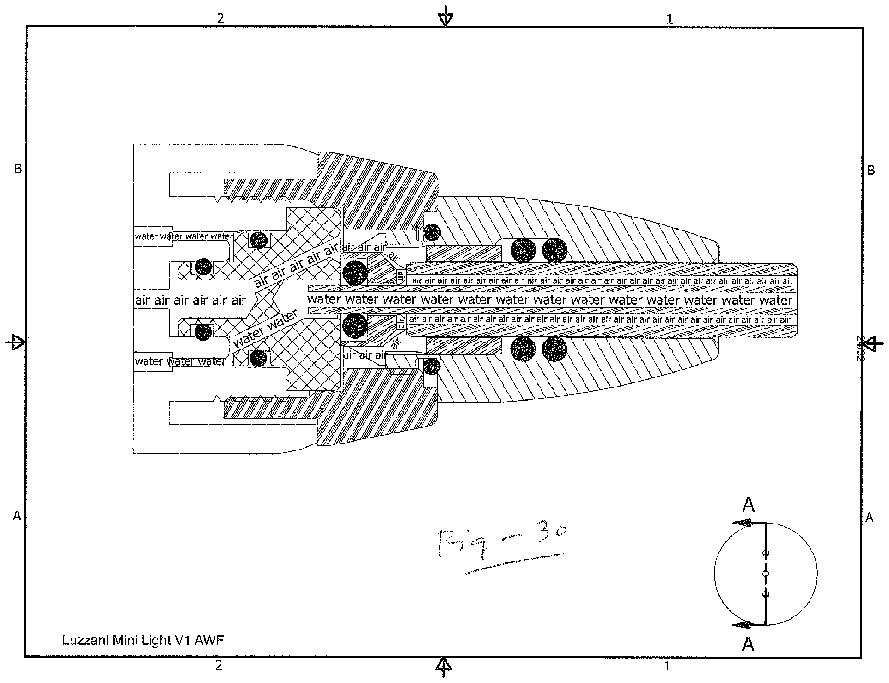

Figure 29 is directed to the Luzzani Mini Mate syringe body and Figure 30 is directed to the Luzzani Mini Light syringe body with associated conversion kit. The Luzzani Mini Light is very similar to the Mini Mate except that the Mini Light includes a light source. In this case, at least a portion of the disposable tip is constructed form a plastic such as Lucite which acts as a light pipe to conduct the illumination from the distal tip of the optical fiber to the distal end of the tip. As an alternative way to retain the illumination feature, the adapter subassembly may include along its length an optical fiber or solid light to conduct the illumination from the distal tip of the optical fiber to a light-emitting port disposed on the side of the adapter unit. The adapter subassembies are shown at 2901, 3001 and the cap subassemblies at 2900, 3000.

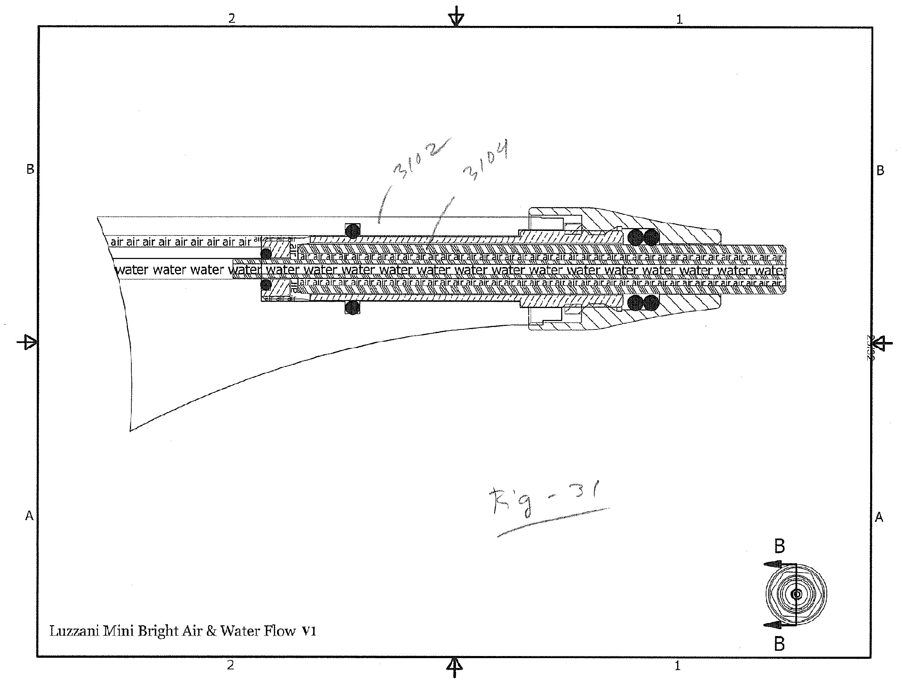

Figure 31 is a cross section of a Luzzani Mini Brite syringe body and conversion kit, which includes an adapter subassembly with an elongated stem 3104 that extends deep into the syringe body 3102. The cap subassembly is shown at 3100, and the cap subassembly, at 3101, amounts to an elongated ferrule.

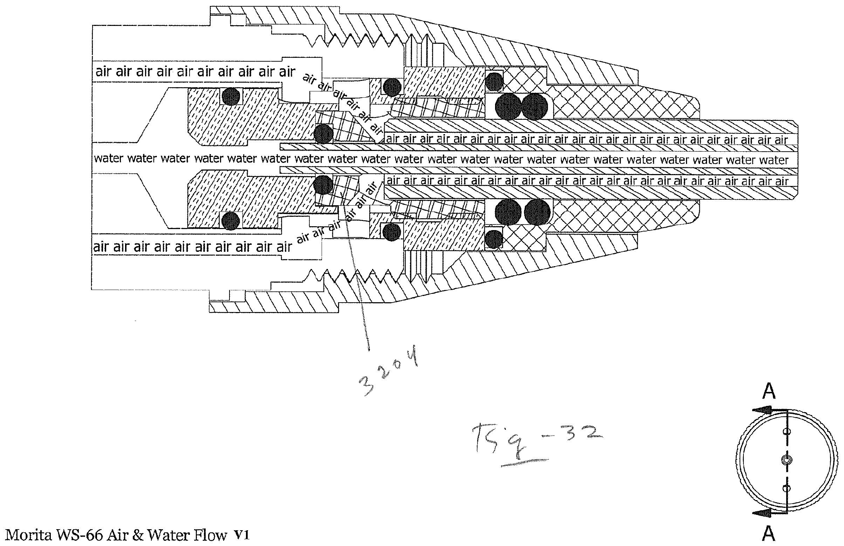

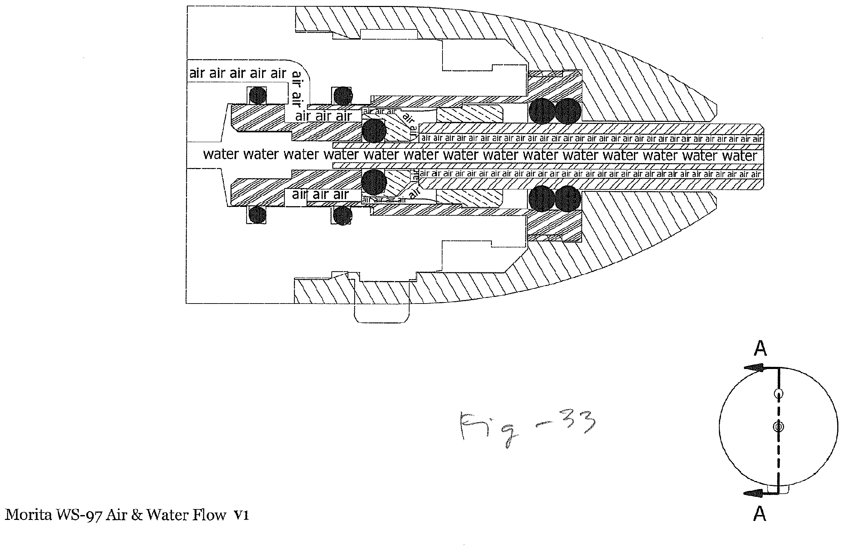

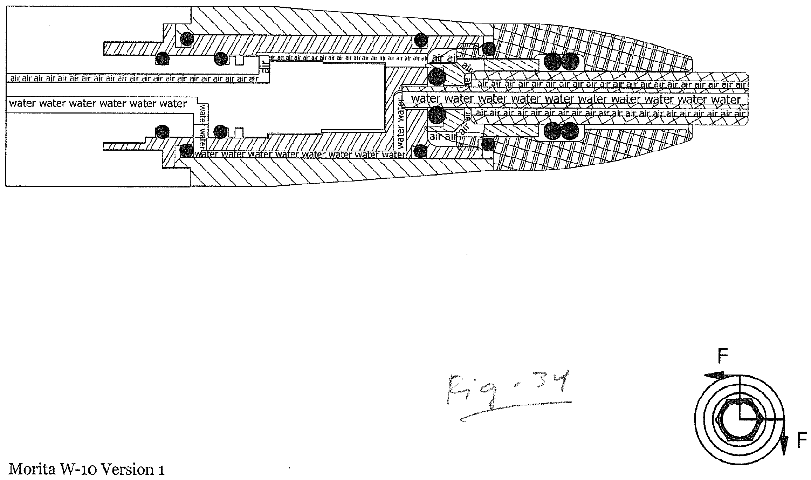

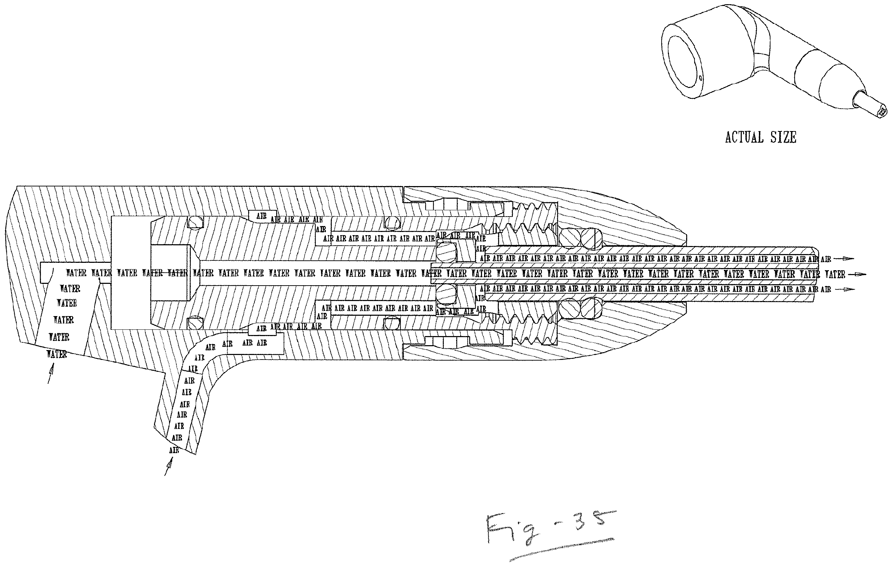

Figures 32 to 35 reside in conversion kits for Mortia syringes. Figure 32 concerns the Morita WS66; Figure 33, the Morita WS97; Figure 34, the Morita W10, and Figure 35, the Morita Model 12. All of the conversion kits are quite complex, requiring multiple components and o-rings in the adapter subassemblies. Indeed, most of the designs require modified ferrules, some without a cup-shaped receptacle. The Morita 12 includes the entire upper portion of what would otherwise considered to be the syringe body.

In Figure 32, the cap subassembly is shown at 3200, and the adapted subassembly is shown at 3201. In Figure 33, the cap subassembly is shown at 3300, and the adapted subassembly is shown at 3301. In Figure 34, the cap subassembly is shown at 3400, and the adapted subassembly is shown at 3401. In Figure 35, the cap subassembly is shown at 3500, and the adapted subassembly is shown at 3501.

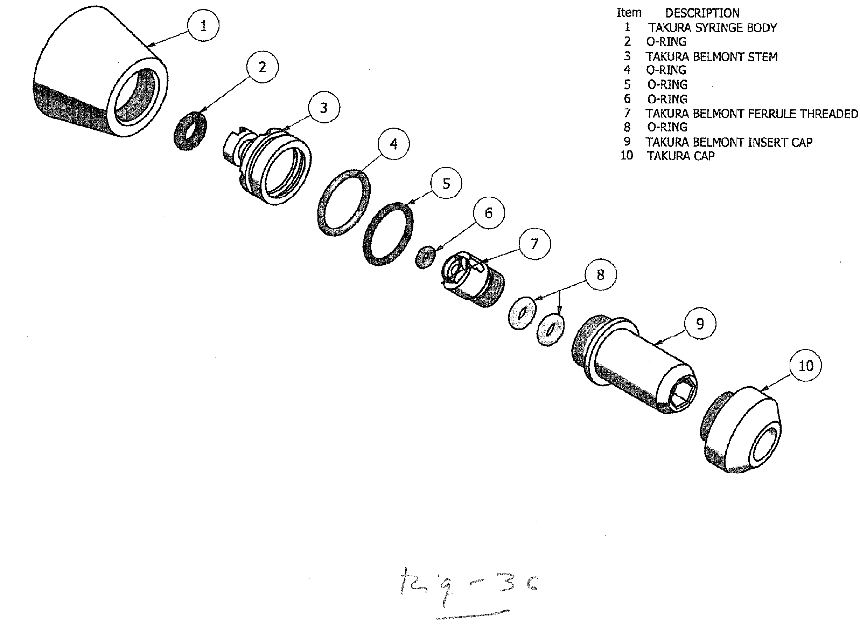

Figure 36 is an exploded view of a Takara Belmont syringe body and conversion kit. In addition to the associated o-rings, the cap subassembly in this case includes items 9, 10, and the adapter subassembly includes component 3. The ferrule, threaded in this case, is shown at 7.

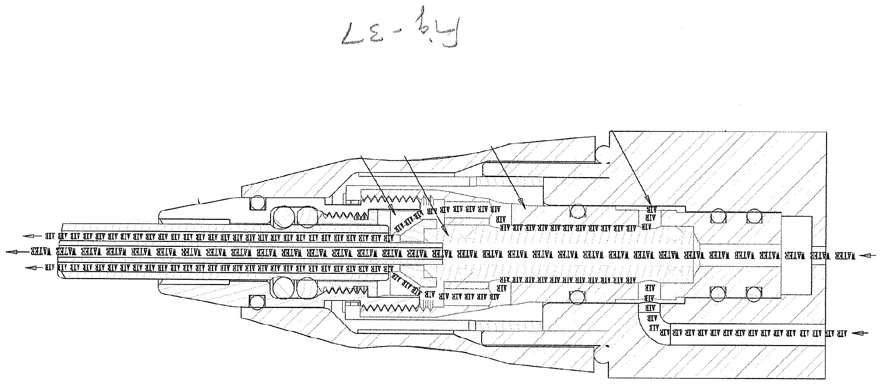

Figure 37 is an exploded view of an Osada MSF syringe body and a conversion kit. Although quite different in overall design, both adapter subassemblies incorporate multiple components and threaded ferrules. The syringe body in Figure 3702 is cross-hatched in this illustration. The adapter subassembly 3701 includes a stem with o-rings received by the syringe body. The cap subassembly 3700 is actually received by the adapter subassembly in this instance.

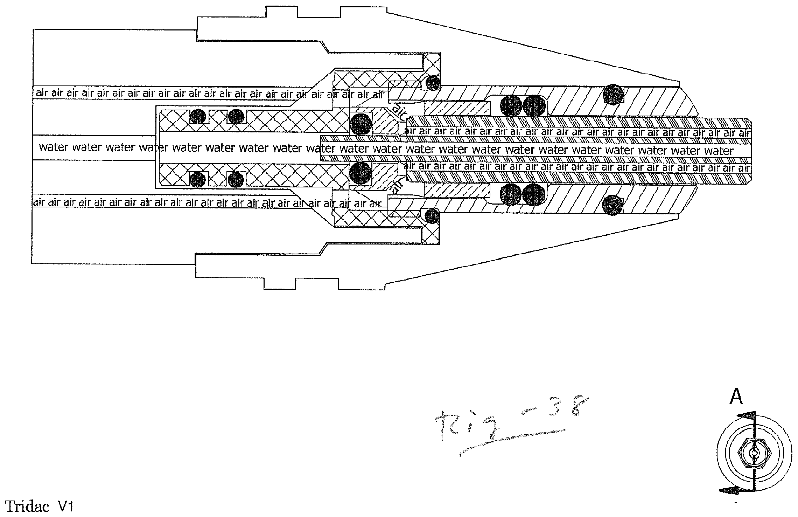

Figure 38 is a cross section of a Tridac syringe body and a conversion kit enabling the syringe to accept disposable tips. The cap subassembly 3800 includes and outer cap body 3802 that is not cross-hatched. The adapted subassembly includes a stem 3801 that is received by the syringe body 3804.

## Claims

1. A plurality of adapter units enabling various air/water syringe bodies each configured to receive an autoclavable tip to instead receive an elongated, disposable tip having proximal and distal ends and a central, water-carrying tube surrounded by air-carrying channels, the water-carrying tube protruding from the proximal end of the disposable tip, the proximal end of the disposable tip including a tapered region (422), each adapter unit configured to enable a respective syringe body to be used with the elongated, disposable tip, each adapter unit comprising:
a cap subassembly (402) including a cap body with a distal opening into which the proximal end of the elongated disposable tip (400) is insertable, the cap subassembly including a cup-shaped ferrule with a central opening to receive the water-carrying tube extending from the proximal end of the disposable tip and one or more side cut-outs through which air passes into the air-carrying channels of the disposable tip, the tapered region of the disposable tip ensuring that the tip end does not bottom out against the bottom of the ferrule cup; and
an adapter subassembly (610) having a proximal end configured for connection to the respective syringe body (602) and a distal end configured for coupling to the cap subassembly (402), the adapter subassembly (610) including one or more components (1208, 1210) with cut-outs, grooves or channels to direct air and water from the respective syringe body (602) to the air-carrying channels and water-carrying tube of the disposable tip (400) through the cap subassembly (402).

2. The plurality of adapter units of claim 1, wherein each adapter subassembly includes a proximal receptacle to receive a stem on the respective syringe body.

3. The plurality of adapter units of claim 1, wherein each adapter subassembly includes a proximal stem insertable into the respective syringe body.

4. The plurality of adapter units of claim 1, wherein each adapter subassembly includes one or more proximal air- or water-carrying tubes insertable into the respective syringe body.

5. The plurality of adapter units of claim 1, wherein each adapter subassembly includes a threaded connection to the respective syringe body.

6. The plurality of adapter units of claim 1, wherein each adapter unit includes a threaded connection or a connect/disconnect connection between the respective cap and adapter subassemblies.

7. The plurality of adapter units of claim 1, wherein the cap and adapter subassemblies are autoclavable in the absence of the disposable tip.

8. The plurality of adapter units of claim 1, wherein each adapter subassembly includes an internal structure with a first path for coupling a water port of the respective syringe body to the water-carrying tube of the tip through the respective cap subassembly, and a second path for coupling an air port of the respective syringe body to the air-carrying channels of the disposable tip through the respective cap subassembly;
wherein each adapter unit includes a receptacle having a bottom portion cooperating with the proximal base surface of the tip once inserted into the respective cap subassembly, the receptacle further including an aperture through which the water-carrying tube of the tip extends;
wherein a cavity is established between the bottom portion of the receptacle and the base surface of the tip; and
wherein the receptacle includes one or more side apertures through which air from the respective syringe body passes into the cavity and into the air-carrying channels of the tip.

9. The plurality of adapter units of claim 8, wherein each receptacle is a separate component coupled to the respective cap subassembly.

10. A method enabling a dental syringe having an existing tip to instead receive a disposable tip having a central, water-carrying tube surrounded by a plurality of air-carrying channels, comprising the steps of:
removing the existing tip (606) from the syringe body (602) configured to receive the existing tip (606);
coupling the conversion assembly to the syringe body (602), the conversion assembly having a proximal end adapted for connection to the syringe body (602) in place of the existing tip (606), and a distal end with an opening to receive the proximal end of a disposable tip (400) that is a different type of tip as the existing tip (606), the conversion assembly comprising a proximal adapter subassembly (610) of the pluarality of adapter units according to one of claims 1-9 connected to a separate distal cap subassembly (402) of the plurality of adapter units according to one of claims 1-9, the conversion unit including an internal structure with a first path for coupling a water port of the syringe (602) to the water-carrying tube of the tip (400) and a second path for coupling an air port of the syringe body (602) to the air-carrying channels of the tip (400); and
inserting the proximal end of the tip (400) into the distal end of the conversion assembly such that water is able to flow from the syringe body (602) through the water-carrying tube of the disposable tip (400), and air from the syringe body (602) is able to flow from the syringe body (602) through the air-carrying channels of the disposable tip (400).

11. The method of claim 10, including one or more of the following steps:
providing a conversion assembly with a proximal receptacle to receive a stem on the syringe body,
providing a conversion assembly with a proximal stem insertable into the syringe body,
providing a conversion assembly with one or more proximal air- or water-carrying tubes insertable into the syringe body, or
providing a conversion assembly threaded connection to the syringe body.

## Patentansprüche

1. Mehrzahl von Adaptereinheiten, die es verschiedenen Luft-/Wasserduschenkörpern, die jeweils zum Aufnehmen eines autoklavierbaren Aufsatzes gestaltet sind, zu ermöglichen, stattdessen einen länglichen Einwegaufsatz aufzunehmen, der ein proximales und ein distales Ende und eine zentrale wasserführende Röhre aufweist, die von luftführenden Kanälen umgeben ist, wobei die wasserführende Röhre aus dem proximalen Ende des Einwegaufsatzes hervorsteht, wobei das proximale Ende des Einwegaufsatzes eine konisch zulaufende Region (422) enthält, wobei jede Adaptereinheit dazu gestaltet ist, es einem jeweiligen Duschenkörper zu ermöglichen, mit dem länglichen Einwegaufsatz verwendet zu werden, wobei jede Adaptereinheit Folgendes umfasst:
eine Kappen-Teilbaugruppe (402), die einen Kappenkörper mit einer distalen Öffnung enthält, in die das proximale Ende des länglichen Einwegaufsatzes (400) einführbar ist, wobei die Kappen-Teilbaugruppe eine kappenförmige Hülse mit einer zentralen Öffnung, um die wasserführende Röhre aufzunehmen, die sich von dem proximalen Ende des Einwegaufsatzes erstreckt, und mit einem oder mehreren seitlichen Ausschnitten enthält, durch die Luft in die luftführenden Kanäle des Einwegaufsatzes gelangt, wobei die konisch zulaufende Region des Einwegaufsatzes gewährleistet, dass das Aufsatzende nicht am Boden der Hülsenkappe aufsitzt, und
eine Adapter-Teilbaugruppe (610), die ein proximales Ende, das für die Verbindung mit dem jeweiligen Duschenkörper (602) gestaltet ist, und ein distales Ende aufweist, das für die Kopplung mit der Kappen-Teilbaugruppe (402) gestaltet ist, wobei die Adapter-Teilbaugruppe (610) ein oder mehrere Bauteile (1208, 1210) mit Ausschnitten, Rillen oder Kanälen enthält, um Luft und Wasser von dem jeweiligen Duschenkörper (602) durch die Kappen-Teilbaugruppe (402) zu den luftführenden Kanälen und der wasserführenden Röhre des Einwegaufsatzes (400) zu leiten.

2. Mehrzahl von Adaptereinheiten nach Anspruch 1, wobei jede Adapter-Teilbaugruppe eine proximale Buchse enthält, um einen Schaft des jeweiligen Duschenkörpers aufzunehmen.

3. Mehrzahl von Adaptereinheiten nach Anspruch 1, wobei jede Adapter-Teilbaugruppe einen proximalen Schaft enthält, der in den jeweiligen Duschenkörper einführbar ist.

4. Mehrzahl von Adaptereinheiten nach Anspruch 1, wobei jede Adapter-Teilbaugruppe eine oder mehrere proximale luft- oder wasserführende Röhren enthält, die in den jeweiligen Duschenkörper einführbar sind.

5. Mehrzahl von Adaptereinheiten nach Anspruch 1, wobei jede Adapter-Teilbaugruppe eine Gewindeverbindung mit dem jeweiligen Duschenkörper enthält.

6. Mehrzahl von Adaptereinheiten nach Anspruch 1, wobei jedes Adaptereinheit eine Gewindeverbindung oder eine Verbinden-/Trennen-Verbindung zwischen der jeweiligen Kappen- und Adapter-Teilbaugruppe enthält.

7. Mehrzahl von Adaptereinheiten nach Anspruch 1, wobei die Kappen- und Adapter-Teilbaugruppen in Abwesenheit des Einwegaufsatzes autoklavierbar sind.

8. Mehrzahl von Adaptereinheiten nach Anspruch 1, wobei jede Adapter-Teilbaugruppe eine interne Struktur mit einem ersten Weg zum Koppeln eines Wasseranschlusses des jeweiligen Duschenkörpers mit der wasserführenden Röhre des Aufsatzes über die jeweilige Kappen-Teilbaugruppe und einem zweiten Weg zum Koppeln eines Luftanschlusses des jeweiligen Duschenkörpers mit den luftführenden Kanälen des Einwegaufsatzes über die jeweilige Kappen-Teilbaugruppe enthält,
wobei jede Adpatereinheit eine Buchse mit einem Bodenabschnitt enthält, der mit der proximalen Basisoberfläche des Aufsatzes zusammenwirkt, sobald dieser in die jeweilige Kappen-Teilbaugruppe eingeführt ist, wobei die Buchse ferner einen Durchlass enthält, durch den sich die wasserführende Röhre des Aufsatzes erstreckt,
wobei zwischen dem unteren Abschnitt der Buchse und der Basisoberfläche des Aufsatzes ein Hohlraum gebildet ist und
wobei die Buchse einen oder mehrere Seitendurchlässe enthält, durch die Luft von dem jeweiligen Duschenkörper in den Hohlkörper und in die luftführenden Kanäle des Aufsatzes gelangt.

9. Mehrzahl von Adaptereinheiten nach Anspruch 8, wobei jede Buchse ein separates Bauteil ist, das mit der jeweiligen Kappen-Teilbaugruppe gekoppelt ist.

10. Verfahren, das es einer Dentaldusche mit vorhandenem Aufsatz ermöglicht, stattdessen einen Einwegaufsatz aufzunehmen, der eine zentrale wasserführende Röhre aufweist, die von mehreren luftführenden Kanälen umgeben ist, die folgenden Schritte umfassend:
Abnehmen des vorhandenen Aufsatzes (606) von dem Duschenkörper (602), der zum Aufnehmen des vorhandenen Aufsatzes (606) gestaltet ist,
Koppeln der Umrüstungsbaugruppe mit dem Duschenkörper (602), wobei die Umrüstungsbaugruppe ein proximales End, das für die Verbindung mit dem Duschenkörper (602) anstelle des vorhandenen Aufsatzes (606) eingerichtet ist, und ein distales Ende mit einer Öffnung zum Aufnehmen des proximalen Endes eines Einwegaufsatzes (400), der ein anderer Typ von Aufsatz als der vorhandene Aufsatz (606) ist, aufweist, wobei die Umrüstungsbaugruppe eine proximale Adapter-Teilbaugruppe (610) der Mehrzahl von Adaptereinheiten nach einem der Ansprüche 1-9 verbunden mit einer separaten distalen Kappen-Teilbaugruppe (402) der Mehrzahl von Adaptereinheiten nach einem der Ansprüche 1-9 umfasst, wobei die Umrüstungseinheit eine interne Struktur mit einem ersten Weg zum Koppeln eines Wasseranschlusses der Dusche (602) mit der wasserführenden Röhre des Aufsatzes (400) und einem zweiten Weg zum Koppeln eines Luftanschlusses des Duschenkörpers (602) mit den luftführenden Kanälen des Aufsatzes (400) enthält, und
Einführen des proximalen Endes des Aufsatzes (400) in das distale Ende der Umrüstungsbaugruppe derart, dass Wasser von dem Duschenkörper (602) durch die wasserführende Röhre des Einwegaufsatzes (400) strömen kann und Luft aus dem Duschenkörper (602) von dem Duschenkörper (602) durch die luftführenden Kanäle des Einwegaufsatzes (400) strömen kann.

11. Verfahren nach Anspruch 10, einen oder mehrere der folgenden Schritte enthaltend:
Bereitstellen einer Umrüstungsbaugruppe mit einer proximalen Buchse zum Aufnehmen eines Schaftes an dem Duschenkörper,
Bereitstellen einer Umrüstungsbaugruppe mit einem proximalen Schaft, der in den Duschenkörper einführbar ist,
Bereitstellen einer Umrüstungsbaugruppe mit einer oder mehreren proximalen luft- oder wasserführenden Röhren, die in den Duschenkörper einführbar sind, oder
Bereitstellen einer Gewindeverbindung einer Umrüstungsbaugruppe mit dem Duschenkörper.

## Revendications

1. Pluralité d'unités d'adaptateur permettant à divers corps de seringue à air/eau chacun configuré pour recevoir un embout stérilisable en autoclave de recevoir à la place un embout jetable allongé ayant des extrémités proximale et distale et un tube à eau central entouré par des canaux à air, le tube à eau faisant saillie à partir de l'extrémité proximale de l'embout jetable, l'extrémité proximale de l'embout jetable comprenant une région conique (422), chaque unité d'adaptateur configurée pour permettre à un corps de seringue respectif d'être utilisé avec l'embout jetable allongé, chaque unité d'adaptateur comprenant :
un sous-ensemble capuchon (402) comprenant un corps de capuchon ayant une ouverture distale dans laquelle l'extrémité proximale de l'embout jetable allongé (400) est insérable, le sous-ensemble capuchon comprenant une ferrule en forme de coupelle ayant une ouverture centrale pour recevoir le tube à eau s'étendant à partir de l'extrémité proximale de l'embout jetable et une ou plusieurs découpes latérales à travers lesquelles l'air passe dans les canaux à air de l'embout jetable, la région conique de l'embout jetable assurant que l'extrémité de l'embout ne descende pas contre le fond ce la coupelle de la ferrule ; et
un sous-ensemble adaptateur (610) ayant une extrémité proximale configurée pour un raccord au corps de seringue (602) respectif et une extrémité distale configurée pour un couplage au sous-ensemble capuchon (402), le sous-ensemble adaptateur (610) comprenant un ou plusieurs composants (1208, 1210) ayant des découpes, des rainures ou des canaux pour diriger l'air et l'eau depuis le corps de seringue (602) respectif jusqu'aux canaux à air et au tube à eau de l'embout jetable (400) à travers le sous-ensemble capuchon (402).

2. Pluralité d'unités d'adaptateur selon la revendication 1, dans laquelle chaque sous-ensemble adaptateur comprend un réceptacle proximal pour recevoir une tige sur le corps de seringue respectif.

3. Pluralité d'unités d'adaptateur selon la revendication 1, dans laquelle chaque sous-ensemble adaptateur comprend une tige proximale insérable dans le corps de seringue respectif.

4. Pluralité d'unités d'adaptateur selon la revendication 1, dans laquelle chaque sous-ensemble adaptateur comprend un ou plusieurs tubes proximaux à air ou à eau insérables dans le corps de seringue respectif.

5. Pluralité d'unités d'adaptateur selon la revendication 1, dans laquelle chaque sous-ensemble adaptateur comprend un raccord fileté au corps de seringue respectif.

6. Pluralité d'unités d'adaptateur selon la revendication 1, dans laquelle chaque unité d'adaptateur comprend un raccord fileté ou un raccord de liaison/séparation entre les sous-ensembles capuchon et adaptateur respectifs.

7. Pluralité d'unités d'adaptateur selon la revendication 1, dans laquelle les sous-ensembles capuchon et adaptateur sont stérilisables en autoclave en l'absence de l'embout jetable.

8. Pluralité d'unités d'adaptateur selon la revendication 1, dans laquelle chaque sous-ensemble adaptateur comprend une structure interne ayant un premier trajet pour coupler un orifice d'air du corps de seringue respectif au tube à eau de l'embout à travers le sous-ensemble capuchon respectif, et un second trajet pour coupler un orifice d'air du corps de seringue respectif aux canaux à air de l'embout jetable à travers le sous-ensemble capuchon respectif ;
dans laquelle chaque unité d'adaptateur comprend un réceptacle ayant une partie de fond coopérant avec la surface de base proximale de l'embout une fois qu'il est inséré dans le sous-ensemble capuchon respectif, le réceptacle comprenant en outre une ouverture à travers laquelle le tube à eau de l'embout s'étend ;
dans laquelle une cavité est établie entre la partie de fond du réceptacle et la surface de base de l'embout ; et
dans laquelle le réceptacle comprend une ou plusieurs ouvertures latérales à travers lesquelles l'air provenant du corps de seringue respectif passe dans la cavité et dans les canaux à air de l'embout.

9. Pluralité d'unités d'adaptateur selon la revendication 8, dans laquelle chaque réceptacle est un composant séparé couplé au sous-ensemble capuchon respectif.

10. Procédé permettant à une seringue dentaire ayant un embout existant de recevoir à la place un embout jetable ayant un tube à eau central entouré par une pluralité de canaux à air, comprenant les étapes de :
retrait de l'embout existant (606) du corps de seringue (602) configuré pour recevoir l'embout existant (606) ;
couplage de l'ensemble de conversion au corps de seringue (602), l'ensemble de conversion ayant une extrémité proximale adaptée pour un raccord au corps de seringue (602) à la place de l'embout existant (606), et une extrémité distale ayant une ouverture pour recevoir l'extrémité proximale d'un embout jetable (400) qui est un type d'embout différent de l'embout existant (606), l'ensemble de conversion comprenant un sous-ensemble adaptateur (610) proximal de la pluralité d'unités d'adaptateur selon l'une quelconque des revendications 1-9 raccordé à un sous-ensemble capuchon (402) distal séparé de la pluralité d'unités d'adaptateur selon l'une quelconque des revendications 1-9, l'unité de conversion comprenant une structure interne ayant un premier trajet pour coupler un orifice d'air de la seringue (602) au tube à eau de l'embout (400) et un second trajet pour coupler un orifice d'air du corps de seringue (602) aux canaux à air de l'embout (400) ; et
insertion de l'extrémité proximale de l'embout (400) dans l'extrémité distale de l'ensemble de conversion de telle manière que l'eau est apte à s'écouler depuis le corps de seringue (602) à travers le tube à eau de l'embout jetable (400), et l'air provenant du corps de seringue (602) est apte à s'écouler depuis le corps de seringue (602) à travers les canaux à air de l'embout jetable (400).

11. Procédé selon la revendication 10, comprenant une ou plusieurs des étapes suivantes :
fait de doter un ensemble de conversion d'un réceptacle proximal pour recevoir une tige sur le corps de seringue,
fait de doter un ensemble de conversion d'une tige proximale insérable dans le corps de seringue,
fait de doter un ensemble de conversion d'un ou plusieurs tubes proximaux à air ou à eau insérables dans le corps de seringue, ou
fait de doter un ensemble de conversion d'un raccord fileté au corps de seringue.
